# EUROPEAN PATENT APPLICATION

(11) **EP 3 879 305 A1**
(43) Date of publication of application: **15.09.2021**
(21) Application number: 19883008.5
(22) Date of filing: 28.08.2019
(51) Int. Cl.: G01S 7/489

(54) **DISTANCE SENSOR DEVICE, CONTROL METHOD, AND ELECTRONIC INSTRUMENT**

(30) Priority: 08.11.2018 JP 2018210360
(71) Applicant: Sony Group Corporation, Tokyo 108-0075 (JP)
(72) Inventor: ONO, Tomoki, Tokyo 108-0075 (JP)
(74) Representative: D Young & Co LLP
(86) International application number: PCT/JP2019/033667
(87) International publication number: WO 2020/095514

(57) **Abstract**

A distance sensor apparatus includes: a light receiving unit that receives reflected light from a subject, the light receiving unit including a light receiving element unit and a drive unit that supplies a drive voltage to the light receiving element unit, in which an application voltage to the light receiving element unit becomes larger than a breakdown voltage in a distance measurement period by the drive voltage, and the application voltage becomes larger with passage of time.

## Description

### TECHNICAL FIELD

The present disclosure relates to a distance sensor apparatus, a control method, and electronic equipment.

### BACKGROUND ART

Conventionally, there has been proposed an apparatus for acquiring distance information regarding an object that reflects light (hereinafter, appropriately referred to as a subject) by emitting light and receiving the reflected light (see, for example, Patent Document 1 below).

### CITATION LIST

### PATENT DOCUMENT

Patent Document 1: Japanese Patent Application Laid-Open No. 2015-117970

### SUMMARY OF THE INVENTION

### PROBLEMS TO BE SOLVED BY THE INVENTION

In such a field, it is desired to be able to measure (gauge) the distance with high accuracy regardless of the distance to the subject.

Therefore, an object of the present disclosure is to provide a distance sensor apparatus, a control method, and electronic equipment capable of measuring the distance to a subject with high accuracy.

### SOLUTIONS TO PROBLEMS

The present disclosure is, for example, a distance sensor apparatus including: a light receiving unit that receives reflected light from a subject, the light receiving unit including a light receiving element unit and a drive unit that supplies a drive voltage to the light receiving element unit, in which an application voltage to the light receiving element unit becomes larger than a breakdown voltage in a distance measurement period by the drive voltage, and the application voltage becomes larger with passage of time.

The present disclosure may be electronic equipment including the above-mentioned distance sensor apparatus.

The present disclosure is, for example, a method for controlling a distance sensor apparatus, the method including: receiving reflected light from a subject by a light receiving unit; supplying a drive voltage to a light receiving element unit of the light receiving unit by a drive unit; in which an application voltage to the light receiving element unit becomes larger than a breakdown voltage in a distance measurement period by the drive voltage, and the application voltage becomes larger with passage of time.

### BRIEF DESCRIPTION OF DRAWINGS

Fig. 1 is a block diagram for explaining a configuration example of a distance sensor apparatus according to an embodiment.
Fig. 2 is a diagram for explaining a connection example of an LPF and an HPF according to the embodiment.
Fig. 3 is a diagram for explaining frequency characteristics of an LPF and an HPF according to the embodiment.
Fig. 4 is a diagram for explaining an example of noise passing through an HPF according to the embodiment.
Fig. 5 is a diagram for explaining an operation example of the distance sensor apparatus according to the embodiment.
Fig. 6 is a diagram referred to when explaining an example of the operation obtained in the embodiment.
Fig. 7 is a diagram showing an example of an output signal from a light receiving unit according to the embodiment.
Fig. 8 is a diagram for explaining an example of electronic equipment to which a distance gauging apparatus has been applied.
Fig. 9 is a diagram for explaining a variation example.
Fig. 10 is a block diagram showing an example of a schematic configuration of a vehicle control system according to an application example.
Fig. 11 is an explanatory diagram showing an example of installation positions of a vehicle outside information detecting unit and an imaging unit according to the application example.

### MODE FOR CARRYING OUT THE INVENTION

An embodiment and the like of the present disclosure will be described below with reference to the drawings. Note that description will be presented in the following order.

### <Description regarding general technology>

### <Embodiment>

### <Variation example>

### <Application example>

The embodiment and the like described below are preferable specific examples of the present disclosure, and the content of the present disclosure is not limited to such embodiment and the like.

### [Description regarding general technology]

First, in order to facilitate the understanding of the present disclosure, a general technology will be described. A time of flight (ToF) distance sensor apparatus that measures the distance to a subject by irradiating the subject with a pulse laser and measuring the flight time of scattered light is used for various purposes such as terrain gauging, obstacle gauging in automatic driving, gesture detection, and defect inspection on production lines.

There are various proposals for the structure of the distance sensor apparatus depending on the purposes, and these proposals take into consideration gauging range, distance accuracy, repetition frequency, and usage environment (particularly whether or not it can be used outdoors). Since a light receiving element is required to have sensitivity, in addition to avalanche photo diodes (APD) with a magnification of up to 10³, in recent years, an element has been used in which a plurality of SPAD cells, called single photon avalanche diodes (SPAD) or silicon photomultipliers (SiPM) with a magnification of 10⁵ to 10⁶ and capable of detecting single photons, is electrically connected.

The APD operates in linear mode, has a short recharge time after receiving light, and can separate noise and scattered light from the subject, or scattered light from subjects present at a plurality of distances on the time axis. It is excellent in a case where the irradiation intensity is high and the light capture efficiency of the light receiving system is high. Since the SPAD and the SiPM operate in Geiger mode, a sufficient electric signal can be obtained even in a case where the scattered light intensity is weak, but the recharge time is long and there is a worrying undetectable period. In particular, since the scattered light capture efficiency decreases in inverse proportion to the square of the gauging distance, it is often used for long-distance purposes.

In a distance sensor apparatus including a scanning optical system such as line scanning or two-dimensional scanning, the mirror area of the scanning optical system functions as an aperture. The mirror diameter, swing angle, and repetition frequency of the scanning optical system have a trade-off relationship, and the mirror diameter becomes smaller as the swing angle becomes larger and as the repetition frequency becomes larger, and as a result, the scattered light capture efficiency decreases.

Any light receiving elements are susceptible to external light such as sunlight, and countermeasures are required especially for the SPAD and the SiPM having large magnification. In a coaxial optical system in which an emission light path and an incident light path of scattered light are coaxial, the influence of external light can be suppressed because the non-coaxial light capture efficiency is significantly reduced by the aperture. However, in the coaxial optical system, it is known that the SPAD and the SiPM malfunction due to scattering of the emitted light inside the distance sensor. The SPAD excited by internal scattering falls below the breakdown voltage due to the electromotive voltage generated by the avalanche amplification, and is recharged via a quenching resistor after the avalanche amplification is stopped. However, since avalanche amplification occurs due to afterpulse of electrons trapped in defects or the like, the recharge time is longer than the time according to the time constant obtained from the product of the SPAD capacitor and quenching resistor. For long-distance purposes, the undetectable period due to such recharge time does not matter. A shorter recharge time is required for mediumdistance purposes. For example, in Patent Document 1 described above, by lowering the drive voltage below the breakdown voltage at the timing of pulse laser irradiation, the avalanche amplification due to internally scattered light does not occur, and the above-mentioned afterpulse does not occur. Then, the drive voltage is restored to a setting value equal to or higher than the breakdown voltage. Thus, the undetectable period follows the time constant obtained from the product of the SPAD capacitor and quenching resistor. Note that the time constant of the SPAD is from several tens of nanoseconds to several hundreds of nanoseconds.

For example, in a case where a distance sensor is used to detect a natural gesture input in a person's dynamic activity such as a natural user interface (UI), it is necessary to use a mirror with a high swing angle and a high repetition frequency for the emitted light and measure the distance from a short distance of a dozen centimeters to a medium distance of a dozen meters. Furthermore, since resistance to external light is also required, it is necessary to have a coaxial optical system and high-sensitivity measurement in Geiger mode. The undetectable period due to internally scattered light is required to be within several nanoseconds. For example, when the shortest gaugeable distance is 15 centimeters, the undetectable period after the timing of laser emission is 1 nanosecond. With the method of switching the drive voltage of the SPAD from the overvoltage or less to the drive voltage as in the technique described in Patent Document 1, the recharge time obtained from the time constant of the SPAD becomes an undetectable period, and there is a problem that it cannot be measured for several tens of nanoseconds or more. Therefore, it is preferable not to provide a recharge time. In view of the above points, the embodiment will be described in detail.

### <Embodiment>

### [Configuration example of the distance sensor apparatus]

### (General configuration example)

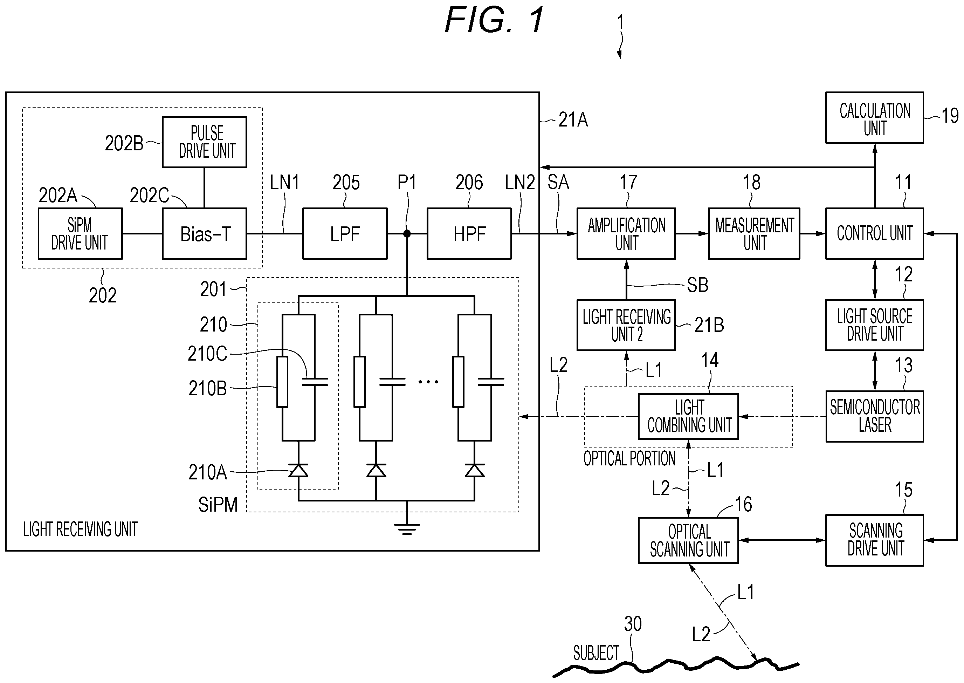

Fig. 1 is a block diagram for explaining a configuration example of a distance sensor apparatus (distance sensor apparatus 1) according to the embodiment. As shown in Fig. 1, generally, a laser beam emitted from the distance sensor apparatus 1 is emitted to a subject 30, which is a distance measurement target, as reference light L1, and reflected light L2 (scattered light) from the subject 30 is received by the distance sensor apparatus 1. Such a configuration in which the emitted light and the reflected light pass through the same light path is called a coaxial optical system. Then, the distance to the subject 30 is gauged by the distance sensor apparatus 1.

The distance sensor apparatus 1 includes, for example, a control unit 11, a light source drive unit 12, a semiconductor laser 13, a light combining unit 14, a scanning drive unit 15, an optical scanning unit 16, a light receiving unit 21A, a light receiving unit 21B, an amplification unit 17, a measurement unit 18, and a calculation unit 19.

The control unit 11 includes a central processing unit (CPU) and the like, and collectively controls each unit of the distance sensor apparatus 1. The control unit 11 includes a read only memory (ROM) and a random access memory (RAM), which are not shown. The ROM stores a program executed by the control unit 11. The RAM is used as a work memory when a program is executed by the control unit 11 and as a temporary data storage area.

The light source drive unit 12 drives the semiconductor laser 13 in response to the control by the control unit 11. For example, the light source drive unit 12 drives the semiconductor laser 13 in a case where a timing signal is received from the control unit 11.

The semiconductor laser 13, which is an example of the light emitting unit, drives the semiconductor laser and emits a pulse laser in response to drive control by the light source drive unit 12. Note that the exact timing at which the pulse laser is emitted may be supplied from the semiconductor laser 13 to the control unit 11.

The pulse laser emitted from the semiconductor laser 13 passes through an optical portion (not shown) such as a collimator lens and a mirror, and the light combining unit 14. The light combining unit 14 changes the light path, and a half mirror, a beam splitter, or the like can be applied.

The scanning drive unit 15 operates the optical scanning unit 16 at a desired frequency and swing angle. The scanning drive unit 15 operates, for example, in response to the control of the control unit 11.

The optical scanning unit 16 scans the direction of light by operating in response to drive control by the scanning drive unit 15. By measuring the distance while the optical scanning unit 16 scans in one or two dimensions in response to the drive control by the scanning drive unit 15, the distance information within a one-dimensional plane, a two-dimensional plane, or a three-dimensional plane can be acquired without limitation to the distance information of one direction (zero dimension). As the optical scanning unit 16, in addition to rotary mirrors such as galvano mirrors and polygon mirrors, micro electro mechanical systems (MEMS) mirrors that enable a reduction in size and high-speed drive can be applied. Note that a window may be provided between the optical scanning unit 16 and the subject 30.

Note that the laser irradiation timing and the operation of the optical scanning unit 16 may be synchronized or asynchronous. A signal indicating the position or angle of the optical scanning unit 16 is supplied from the scanning drive unit 15 to the control unit 11.

The light receiving unit 21A receives the reflected light L2 from the subject 30. The details of the light receiving unit 21A will be described later. An output signal SA (for example, voltage) from the light receiving unit 21A is supplied to the amplification unit 17. The light receiving unit 21B, which is an example of another light receiving unit, receives the reference light L1 split by the light combining unit 14. An output signal SB (for example, voltage) from the light receiving unit 21B is supplied to the amplification unit 17. The light receiving unit 21B includes a light receiving element unit having a light receiving element such as a PIN-PD, an APD, or an SiPM. Note that the configuration of the light receiving unit 21B may be the same as or different from that of the light receiving unit 21A.

The amplification unit 17 is a circuit that amplifies each of the output signal SA and the output signal SB at a predetermined amplification rate or shapes the waveform. As the amplification unit 17, for example, in a case where the voltage after amplification exceeds a predetermined limit value, a limiting amplifier that outputs the limit value can be applied.

The measurement unit 18 measures the arrival time of the reflected light L2 with a time-digital converter. Note that a part of the pulse laser output from the semiconductor laser reaches the light receiving unit 21B without passing through the optical scanning unit 16 and excites the light receiving element of the light receiving unit 21B. The photovoltaic voltage is input to the measurement unit 18 via the amplification unit 17. Since the signal passing through the light receiving unit 21B arrives earlier than the signal passing through the light receiving unit 21A, the distance to the subject 30 can be gauged by subtracting the timing (time) when the light receiving unit 21B received the reference light L1 from the timing (time) when the light receiving unit 21A received the reflected light L2 and multiplying the result by the speed of light and 1/2. Note that the timing of receiving the light is, for example, the timing at which the output signals SA and SB amplified by the amplification unit 17 exceed a predetermined threshold value. The measurement unit 18 supplies the distance information to the subject 30, which is a measurement result, to the control unit 11. The control unit 11 supplies the distance information to the calculation unit 19.

The calculation unit 19 performs various data correction processing on the distance information supplied via the control unit 11. The distance information that has undergone the data correction processing is used for processing according to applications.

### (Configuration example of the light receiving unit)

Next, a configuration example of the light receiving unit 21A will be described. Note that the configuration example described below can also be applied to the light receiving unit 21B.

The light receiving unit 21A includes a light receiving element unit 201, a drive unit 202, an LPF 205, and an HPF 206. The drive unit 202 includes an SiPM drive unit 202A, a pulse drive unit 202B, and a Bias-T 202C.

The light receiving element unit 201 is, for example, an SiPM having having a configuration in which an APD operating in Geiger mode is multi-pixelated. Note that the SiPM is also called multi pixel photon counter (MPPC) or the like. The light receiving element unit 201 includes a plurality of light receiving cells connected in parallel. One light receiving cell (for example, a light receiving cell 210 shown in Fig. 1) includes an APD 210A, a quenching resistor 201B, and a capacitor (capacitive component) 210C. The anode of the APD 210A is grounded. A configuration in which the quenching resistor 201B and the parallel capacitor 210C are connected in parallel is connected to the cathode of the APD 210A. That is, one end of the quenching resistor 201B is connected to the cathode of the APD 210A. Note that the number of light receiving cells 210 is preferably 100 or more in order to obtain sufficient excitation intensity.

The SiPM drive unit 202A is a power supply that supplies a direct current voltage for direct current (DC) drive. The pulse drive unit 202B outputs a pulse signal (rectangular wave). The pulse drive unit 202B switches the level (high or low) of the pulse signal in response to receiving the timing signal supplied from the control unit 11. The control unit 11 supplies the timing signal to the pulse drive unit 202B so as to correspond to the timing at which the pulse laser is emitted, so that the operation of the pulse drive unit 202B is synchronized with the timing of emitting the pulse laser.

The Bias-T 202C combines a direct current (DC) component supplied from the SiPM drive unit 202A and an alternating current (AC) component supplied from the pulse drive unit 202B. Specifically, the Bias-T 202C modulates the direct current voltage supplied from the SiPM drive unit 202A using the pulse signal output by the pulse drive unit 202B. Then, the Bias-T 202C outputs a modulated signal. In the present embodiment, this modulated signal (modulated voltage) is used as a drive voltage.

The drive voltage output from the drive unit 202 is supplied to the light receiving element unit 201 via a drive voltage line LN1. Furthermore, the signal output from the light receiving element unit 201 is read via a signal read line LN2, and the signal read from the light receiving element unit 201 is supplied to the amplification unit 17. The output side (the other end side of the quenching resistor 201B) of the light receiving element unit 201 is connected to a connection point P1, which is the connection point between the drive voltage line LN1 and the signal read line LN2.

In the present embodiment, the LPF 205 is connected to the drive voltage line LN1. Furthermore, the HPF 206 is connected to the signal read line LN2. A diplexer circuit is formed by the LPF 205 and the HPF 206. As shown in Fig. 1, the LPF 205 and the HPF 206 are connected to the light receiving element unit 201. In such a configuration, in a case where a step voltage of several Vs is applied to the light receiving element unit 201 via the LPF 205, the step voltage is also mixed in the HPF 206. Since the minimum measurement level output from the light receiving element unit 201 is several tens of milliVs, it is desirable that the gain from the LPF 205 to the HPF 206 be -40 dB or less. This is because the step voltage and the pulse signal output from the light receiving element unit 201 both have a wide frequency band, and clear frequency band separation cannot be performed unlike a diplexer for communication.

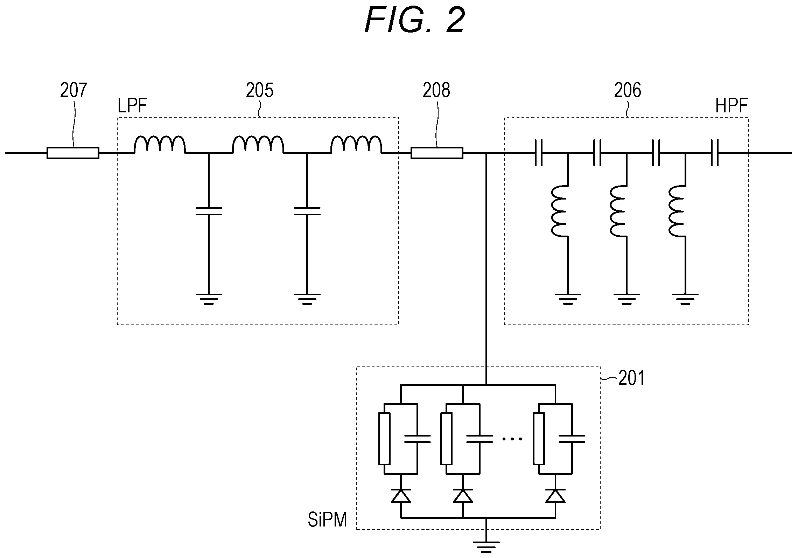

Fig. 2 is a diagram for explaining a connection example of the LPF 205 and the HPF 206. The LPF 205 includes, for example, a five-stage LC filter, and inductors are arranged for each of the input and the output. As shown in Fig. 2, a matching resistor 207 may be connected to the input side of the LPF 205, and an attenuator 208 may be connected to the output side of the LPF 205. By connecting the attenuator 208, the reflection noise from the HPF 206 can be reduced.

The HPF 206 includes, for example, a seven-stage LC filter, and capacitors are arranged for each of the input and the output. The combined impedance of all the light receiving cells of the light receiving element unit 201 is high on the low frequency side and low on the high frequency side. Therefore, in a case where the voltage of all the light receiving cells is modulated, the combined impedance of the desired frequency band and the combined impedance of the LPF 205 are adjusted to match. On the other hand, since the combined impedance including the quenching resistors and the parallel capacitors of the non-excited cells and the excited cells of the light receiving element unit 201 as seen from the excited cells depends on the number of light receiving cells, the impedance matching between the light receiving element unit 201 and the HPF 206 is difficult, and adjustment corresponding to desired characteristics is performed.

As shown in Fig. 2, the configuration in which the output side of the LPF 205 is an inductor instead of a capacitor can prevent a high frequency component from the light receiving element unit 201 from being attenuated by the capacitor and the gain via the HPF 206 from being lowered. Furthermore, the configuration in which the input side of the HPF 206 is a capacitor instead of an inductor can prevent the step voltage input from the LPF 205 from being attenuated by the inductor. Note that as specific LPF 205 and HPF 206, known LC filters such as Bessel, Butterworth, and Chebyshev can be applied, and filters adjusted based on these, filters with resistors inserted, and the like can also be applied.

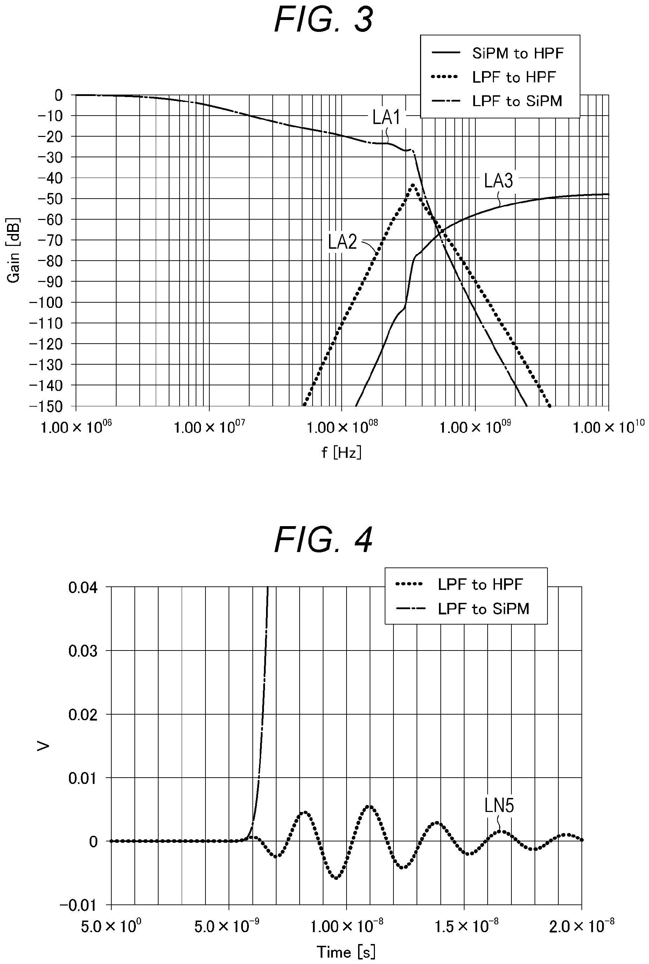

Fig. 3 is a diagram (graph) for explaining the frequency characteristics of the LPF 205 and the HPF 206. in Fig. 3, the vertical axis indicates gain (dB), and the horizontal axis indicates frequency (Hz). The example shown in Fig. 3 shows the frequency characteristics in a case where the Chebyshev filter is used for the LPF 205 and the Bessel filter is used for the HPF 206. The frequency characteristics from the LPF to the light receiving element unit 201 (line LA1 in Fig. 3) has a steep cutoff frequency from 300 MHz to 400 MHz. This cutoff frequency is higher than that of the LPF 205 alone, and is a resonance caused by the coupling of the LPF 205 and the light receiving element unit 201. Such a high frequency component is attenuated by the ratio with respect to the junction capacitance because the voltage of the junction of the light receiving element unit 201 is modulated via the parallel capacitor, not the quenching resistor of the light receiving cell 210 constituting the light receiving element unit 201.

The frequency characteristics from the LPF 205 to the HPF 206 (line LA2 in Fig. 3) have a peak at the resonance frequency of the LPF 205 and the light receiving element unit 201, but are suppressed to -40 dB or less. The frequency characteristics (line LA3 in Fig. 3) from the excited cells to the HPF 206 assuming that about ten light receiving cells 210 of the light receiving element unit 201 are excited are gentle according to the characteristics of the Bessel filter, but have a step at the resonance frequency of the LPF 205 and the light receiving element unit 201. In this way, the LPF 205 and the HPF 206 do not have clear frequency band separation and correspond to the input and the output to the light receiving element unit 201.

Fig. 4 shows an example of noise passing through the HPF 206 in a case where a step voltage of 7 V is applied. In Fig. 4, the vertical axis indicates voltage (V) and the horizontal axis indicates time (seconds). A slight vibration component appears in a period of several tens of nanoseconds from the input. This frequency is 300 MHz to 400 MHz, which is a resonance between the LPF 205 and the light receiving element unit 201. The maximum amplitude is 5 mmV or less. In terms of photons received by the light receiving element unit 201, the number is two or less, which is not more than the measurement threshold level.

### [Operation example of the distance sensor apparatus]

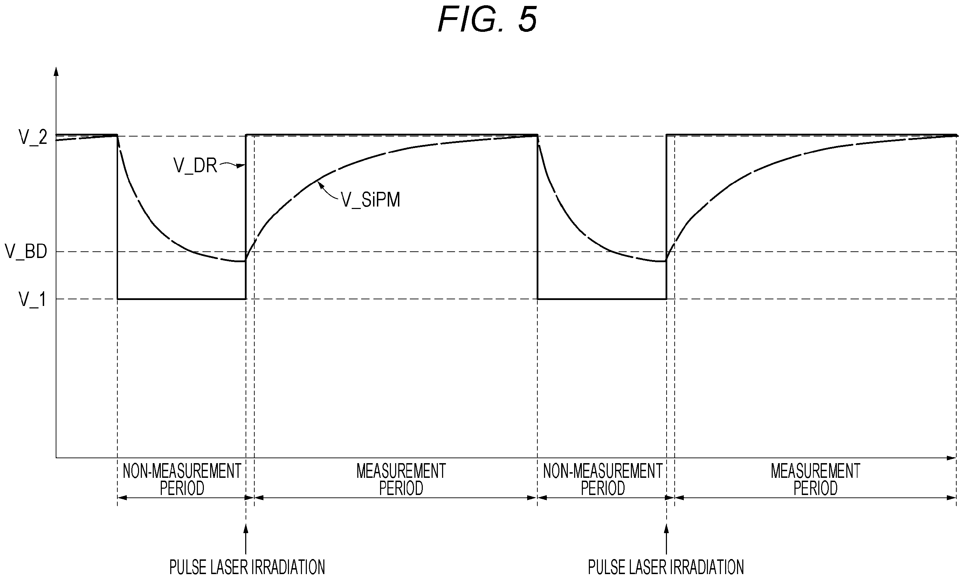

Next, an operation example of the distance sensor apparatus 1 will be described with reference to Fig. 5. In the graph of Fig. 5, the vertical axis indicates the level of voltage and the horizontal axis indicates time axis. In Fig. 5, V_DR switched between V_1 (low) and V_2 (high) is the drive voltage output from the drive unit 202, V_BD is the breakdown voltage of the APD of the light receiving element unit 201, and V_SiPM is the application voltage applied to the light receiving element unit 201.

Before the timing when the subject 30 is irradiated with the pulse laser, V_SiPM is set to equal to or less than the breakdown voltage. Then, at the timing when V_DR is raised from V_1 to V_2, the pulse laser is emitted to the subject 30. In the present embodiment, the controls of the pulse drive unit 202B and the control unit 11 (specifically, the control of driving the light source drive unit 12 and the control of emitting the pulse laser from the semiconductor laser 13) are synchronized, and it becomes possible to irradiate the subject 30 with the pulse laser according to the rise of the drive voltage from V_1 to V_2.

As V_DR changes from V_1 to V_2, a voltage difference between V_2 and V_SiPM is applied to the light receiving element unit 201, and V_SiPM rises exponentially according to the time constant of the light receiving element unit 201. The output from the light receiving element unit 201 can be obtained at the timing when V_SiPM exceeds V_BD, and then the distance measurement period starts. Note that even during the distance measurement period, V_SiPM gradually increases with the passage of time. After the distance measurement period has elapsed, V_DR is lowered from V_2 to V_1. Due to this voltage difference, the voltage of V_SiPM drops exponentially according to the time constant to become V_BD or less, and becomes a standby state until the next distance measurement period. That is, during a distance non-measurement period, V_SiPM changes from a value larger than V_BD to V_BD or less.

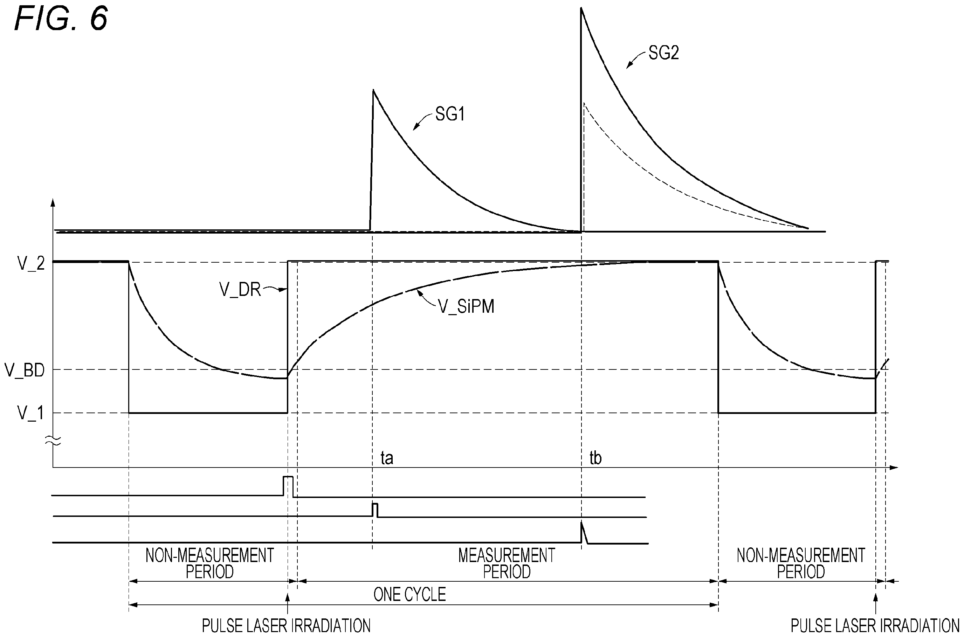

An example of the effect obtained when the distance sensor apparatus 1 is operated by the above-mentioned drive method will be described with reference to Fig. 6. Fig. 6 shows changes in V_DR, V_SiPM, and the like during a certain distance measurement period and a certain distance non-measurement period. Since this point has already been described with reference to Fig. 5, duplicate description will be omitted. Furthermore, Fig. 6 shows an output signal SG1 output from the light receiving element unit 201 in a case where the light receiving element unit 201 receives the reflected light L2 at a timing ta and an output signal SG2 output from the light receiving element unit 201 in a case where the light receiving element unit 201 receives the reflected light L2 at a timing tb. In the following description, the former will be referred to as pattern 1 and the latter will be referred to as pattern 2.

Pattern 1 is a case where the light receiving unit 21A has received the reflected light L2 from the subject 30 located at a position close to the distance sensor apparatus 1 because the output signal SG1 is obtained at an early stage in time. Since the subject 30 is located at a position close to the distance sensor apparatus 1, the intensity of the reflected light L2 is high. On the other hand, Pattern 2 is a case where the light receiving unit 21A has received the reflected light L2 from the subject 30 located at a position far from the distance sensor apparatus 1 because the output signal SG2 is obtained at a later stage in time. Since the subject 30 is located at a position far from the distance sensor apparatus 1, the intensity of the reflected light L2 is low.

Here, the value obtained by subtracting V_BD from V_SiPM above the breakdown voltage is called overvoltage V_OD, and the magnification of the output signal is roughly proportional to V_OD when V_SiPM is V_2 or less. At the initial stage of the distance measurement period, the difference between V_SiPM and V_BD becomes small and V_OD becomes small, so that the magnification also becomes small. For example, the magnification is about 1/10 of the maximum value. However, at the initial stage of the distance measurement period, since the intensity of the reflected light L2 is high as described above, the output signal SG1 at a level required for distance measurement can be obtained even if the magnification is small.

On the other hand, as described above, in a case where the subject 30 is located at a position far from the distance sensor apparatus 1, the intensity of the reflected light L2 is low. Therefore, there is a possibility that an output signal sufficient for measurement cannot be obtained, the accuracy of distance measurement is lowered, and distance measurement cannot be performed. However, V_SiPM increases as time elapses in the measurement period. Therefore, the difference between V_SiPM and V_BD becomes large and V_OD becomes large, so that the magnification also becomes large. Therefore, it is possible to obtain the output signal SG2 not at a level not sufficient for measurement as schematically shown by the dotted line in Fig. 6, but at a level sufficient for measurement as schematically shown by the solid line in Fig. 6. Furthermore, it is not necessary to set a recharge time for V_SiPM, and the distance sensor apparatus 1 can be driven at high speed. Furthermore, restrictions on the gaugeable distance range (for example, short distance) of the distance sensor apparatus 1 can be minimized.

### [Example of the output signal]

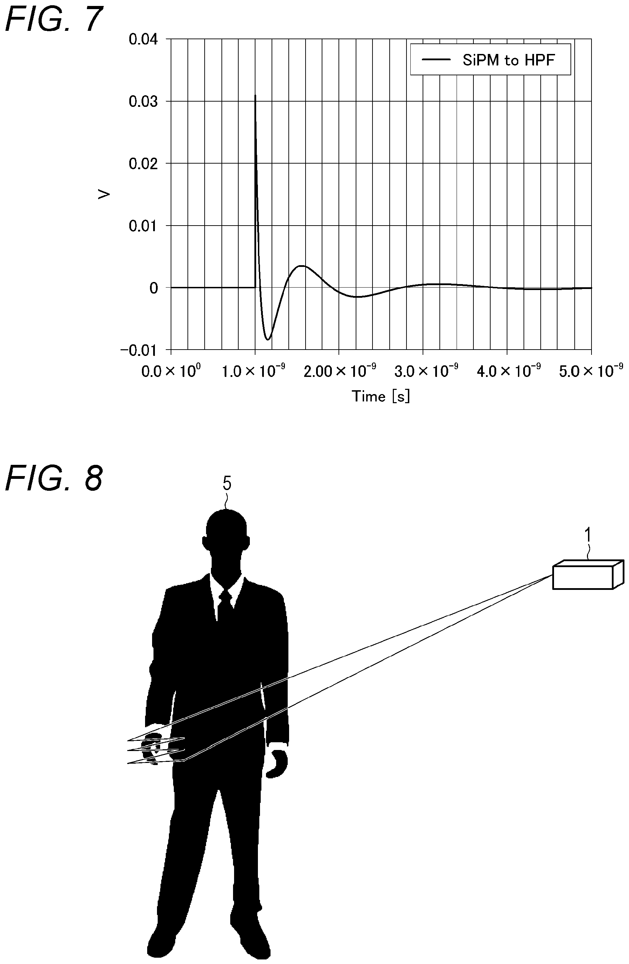

Fig. 7 is a diagram showing an example of an output signal from the HPF 206 in a case where 10 light receiving cells (ten light receiving cells) are excited at V_2 (maximum) of V_SiPM. In Fig. 7, the vertical axis indicates V and the horizontal axis indicates time axis. Following a steep impulse response immediately after excitation, signals due to the resonance between the LPF 205 and the light receiving element unit 201 propagate. All of these are larger than the noise due to the step voltage and reflect the excitation timing, so that they can be used for time measurement. For example, the time accuracy may be improved by measuring the time of both, or the signal intensity may be calculated from the time difference between the two. These signals may have a wide signal pulse width due to the avalanche amplification time of the SiPM constituting the light receiving element unit 201 and the jitter of the light incident on the SiPM, but even in such a case, they can be used for time measurement. In a case where V_SiPM is slightly larger than V_BD, for example, in a case where 100 light receiving cells are excited, an output signal equivalent to that in Fig. 7 can be obtained. Since the scattered light from the subject 30 is inversely proportional to the square of the distance, for example, in a system in which ten photons can enter the light receiving element unit 201 in a case where the subject is present at a distance of ten meters, 10⁵ photons can enter the light receiving element unit 201 at 10 centimeters. Therefore, the S/N between the noise due to the step voltage and the signal from the SiPM does not matter, and the noise level due to the step voltage can be suppressed below the detection threshold value in order to prevent erroneous detection of the measurement system.

### [Electronic equipment applying the distance sensor apparatus]

The distance sensor apparatus 1 of the present disclosure can be realized not as a single unit, but as electronic equipment systematized with various equipment. An example of the electronic equipment will be described.

Fig. 8 shows an example in which the distance sensor apparatus 1 is applied to a gesture recognition apparatus, which is an example of the electronic equipment. The distance sensor apparatus 1 gauges, for example, the distance to the hand of a person 5 in a room, and measures the motion of the hand or fingers from changes in the distance. Therefore, gesture recognition can be performed remotely. Of course, the gesture recognition apparatus may recognize not only the motion of the hand and fingers, but also the motion of the face, feet, and the whole body. Furthermore, a system using a plurality of gesture recognition apparatuses may be used depending on a recognition target. Furthermore, the gesture recognition apparatus may recognize the motion of those other than the person 5. The gesture recognition apparatus can be used to operate games and various electronic equipment, and can display augmented reality (AR) on a target person and the surrounding area using a projector apparatus or the like, and the gesture recognition apparatus can be placed in a public place to obtain human movements as big data.

Furthermore, the distance sensor apparatus 1 may be applied to a projector apparatus, which is another example of the electronic equipment. Then, distance measurement may be performed with respect to each point on a wall surface, which is a projection surface, and the unevenness of the wall surface may be identified. Correction processing (contrast improvement processing, color tone improvement processing, and the like) may be performed on all or part of the image data of the projection image according to the unevenness of the identified wall surface.

Furthermore, the distance gauging apparatus of the present disclosure can also be applied to a safety apparatus that detects the distance to a pedestrian, an obstacle, or the like and activates a brake according to the distance. That is, the distance gauging apparatus of the present disclosure can also be applied to movable objects such as automobiles, trains, airplanes, helicopters, and small flying objects in which such safety apparatus can be used. Furthermore, the distance gauging apparatus of the present disclosure can also be applied to robots (customer service robots, disaster relief robots, cleaning robots, and the like) and security apparatuses. These safety apparatuses, movable objects, and security apparatuses are also included in the above-mentioned electronic equipment because some kind of electrical processing is performed. Note that a specific application example will be described later.

### <Variation example>

Heretofore, the embodiment of the present disclosure has been described in detail, but the content of the present disclosure is not limited to the above-mentioned embodiment, but various variations based on the technical idea of the present disclosure may be made.

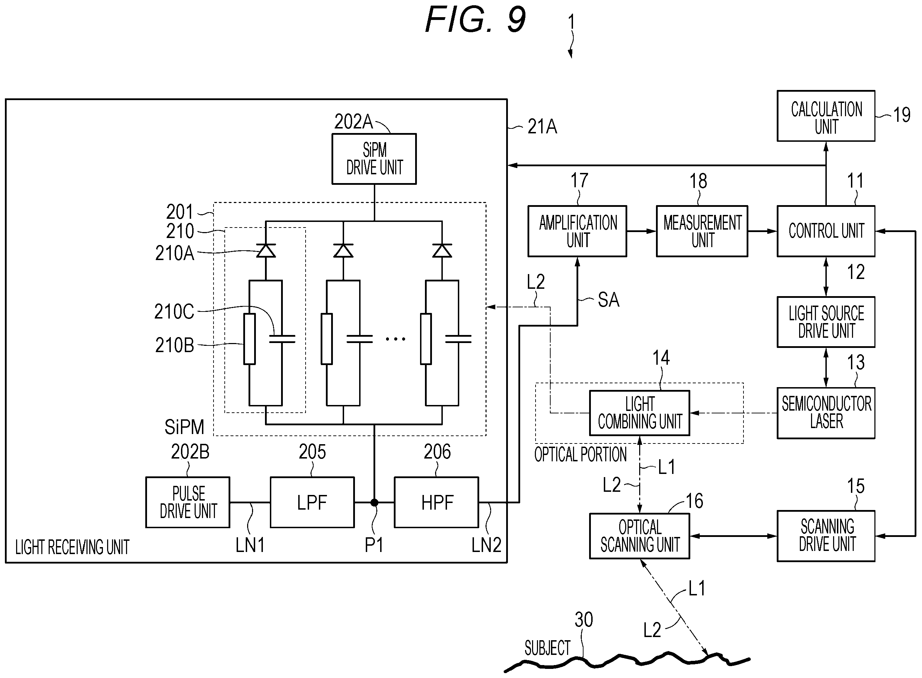

For example, the peripheral circuit of the light receiving element unit 201 is not limited to the circuit configuration shown in the embodiment. For example, as shown in Fig. 9, the quenching resistor and the parallel capacitor may be connected to the anode of the APD of the light receiving element unit 201. The pulse drive unit 202B that supplies the modulated voltage as the drive voltage, the LPF 205, and the HPF 206 are connected to the anode side of the APD. Note that in a case where the light receiving cell 210 does not have the parallel capacitor, there may be a capacitor coupling line independent of each light receiving cell. Furthermore, the circuit configuration in which the quenching resistors of the light receiving cells are connected by a common line may be possible or the circuit configuration in which the capacitors of the light receiving cells are connected by a common line may be possible.

Note that the circuit configuration shown in Fig. 9 is a configuration that does not include the light receiving unit 21B. In the case of such a configuration, the measurement unit 18 acquires the timing at which the semiconductor laser 13 emitted the pulse laser from the control unit 11 or the like, and measures the distance to the subject 30.

The configurations, methods, processes, shapes, materials, numerical values, and the like given in the above-described embodiment are merely examples, and different configurations, methods, processes, shapes, materials, numerical values, and the like may be used as necessary. Furthermore, the matters described in the embodiment and the variation example can be combined with each other as long as technical contradiction does not occur. Furthermore, note that effects described herein are not necessarily limited, but may also be any of those described in the present disclosure. Furthermore, the content of the present disclosure is not construed as being limited by the shown effects.

The present disclosure can also take the following forms.
(1) A distance sensor apparatus including:
   a light receiving unit that receives reflected light from a subject, the light receiving unit including a light receiving element unit and a drive unit that supplies a drive voltage to the light receiving element unit, in which
   an application voltage to the light receiving element unit becomes larger than a breakdown voltage in a distance measurement period by the drive voltage, and the application voltage becomes larger with passage of time.
(2) The distance sensor apparatus according to (1), in which
   the application voltage to the light receiving element unit is changed to equal to or less than the breakdown voltage in a distance non-measurement period by the drive voltage.
(3) The distance sensor apparatus according to (1) or (2), further including:
   a drive voltage line that is connected to the drive unit and a signal read line that is connected to the drive voltage line and reads a signal output from the light receiving unit, in which
   the light receiving element unit is connected to a connection point between the drive voltage line and the signal read line.
(4) The distance sensor apparatus according to (3), in which
   a low-pass filter is connected to the drive voltage line and a high-pass filter is connected to the signal read line.
(5) The distance sensor apparatus according to (3) or (4), in which
   the light receiving element unit includes a plurality of light receiving cells connected in parallel,
   the light receiving cell includes an avalanche photodiode having an anode grounded and a cathode connected to one end side of a quenching resistor, and
   another end side of the quenching resistor is connected to the connection point.
(6) The distance sensor apparatus according to (5), in which
   the number of the light receiving cells is 100 or more.
(7) The distance sensor apparatus according to any of (1) to (6), further including:
   a light emitting unit;
   another light receiving unit that receives light emitted from the light emitting unit; and
   a measurement unit that measures a distance to the subject on the basis of a first timing at which the light receiving unit receives reflected light generated when the light emitted from the light emitting unit is reflected by the subject and a second timing at which the another light receiving unit receives the light emitted from the light emitting unit.
(8) A method for controlling a distance sensor apparatus, the method including:
   receiving reflected light from a subject by a light receiving unit; and
   supplying a drive voltage to a light receiving element unit of the light receiving unit by a drive unit, in which
   an application voltage to the light receiving element unit becomes larger than a breakdown voltage in a distance measurement period by the drive voltage, and the application voltage becomes larger with passage of time.
(9) Electronic equipment including the distance sensor apparatus according to any of (1) to (7).

### <Application example>

The technology according to the present disclosure is applicable to a variety of products. For example, the technology according to the present disclosure may be implemented as apparatuses mounted on any type of movable objects such as automobiles, electric vehicles, hybrid electric vehicles, motorcycles, bicycles, personal mobilities, airplanes, drones, ships, robots, construction machines, and agricultural machines (tractors).

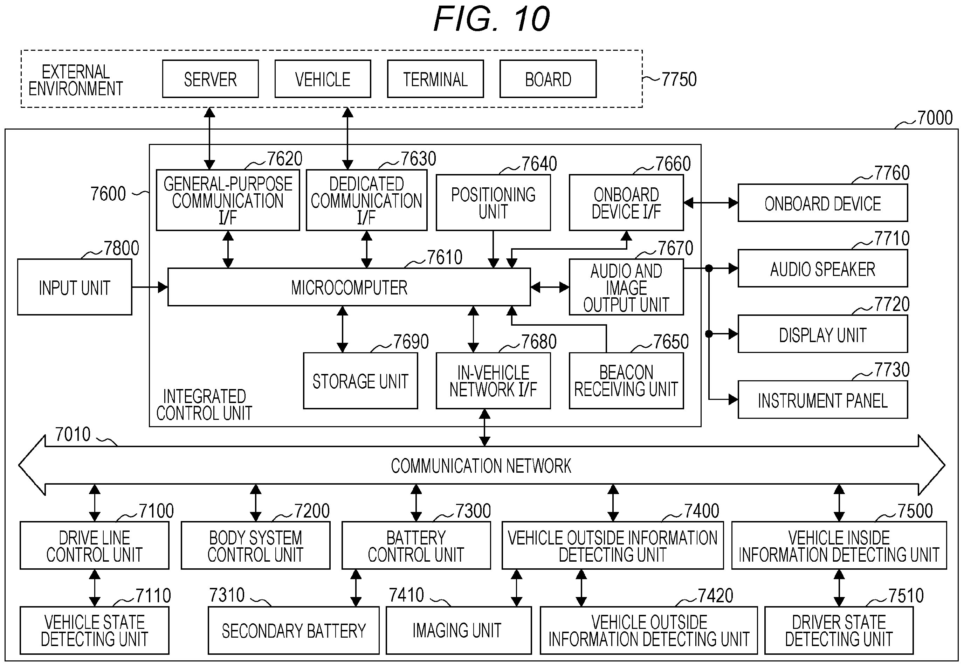

Fig. 10 is a block diagram showing a schematic configuration example of a vehicle control system 7000, which is an example of a movable object control system to which the technology according to the present disclosure can be applied. The vehicle control system 7000 includes a plurality of electronic control units connected via a communication network 7010. In the example shown in Fig. 10, the vehicle control system 7000 includes a drive line control unit 7100, a body system control unit 7200, a battery control unit 7300, a vehicle outside information detecting unit 7400, a vehicle inside information detecting unit 7500, and an integrated control unit 7600. The communication network 7010, which connects the plurality of control units, may be an in-vehicle communication network such as a controller area network (CAN), a local interconnect network (LIN), a local area network (LAN), or FlexRay (registered trademark) that is compliant with any standard.

Each control unit includes a microcomputer that performs arithmetic processing in accordance with a variety of programs, a storage unit that stores the programs, parameters used for the variety of operations, or the like executed by the microcomputer, and a driving circuit that drives apparatuses subjected to various types of control. Each control unit includes a network I/F used to communicate with the other control units via the communication network 7010, and a communication I/F used to communicate with apparatuses, sensors, or the like outside and inside the vehicle through wired communication or wireless communication. Fig. 10 shows a microcomputer 7610, a general-purpose communication I/F 7620, a dedicated communication I/F 7630, a positioning unit 7640, a beacon receiving unit 7650, an onboard device I/F 7660, an audio and image output unit 7670, an in-vehicle network I/F 7680, and a storage unit 7690 as the functional configuration of the integrated control unit 7600. Each of the other control units similarly includes a microcomputer, a communication I/F, a storage unit, and the like.

The drive line control unit 7100 controls the operation of apparatuses related to the drive line of the vehicle in accordance with a variety of programs. For example, the drive line control unit 7100 functions as a control apparatus for a driving force generating apparatus such as an internal combustion engine or a driving motor that generates the driving force of the vehicle, a driving force transferring mechanism that transfers the driving force to wheels, a steering mechanism that adjusts the steering angle of the vehicle, a braking apparatus that generates the braking force of the vehicle, and the like. The drive line control unit 7100 may have the function of a control apparatus for an antilock brake system (ABS), an electronic stability control (ESC), or the like.

The drive line control unit 7100 is connected to a vehicle state detecting unit 7110. The vehicle state detecting unit 7110 includes, for example, at least one of a gyro sensor that detects the angular velocity of the axial rotating motion of the vehicle body, an acceleration sensor that detects the acceleration of the vehicle, or a sensor that detects the operation amount of the accelerator pedal, the operation amount of the brake pedal, the steering angle of the steering wheel, the engine speed, the wheel rotation speed, or the like. The drive line control unit 7100 uses a signal input from the vehicle state detecting unit 7110 to perform arithmetic processing, and controls the internal combustion engine, the driving motors, the electric power steering apparatus, the braking apparatus, or the like.

The body system control unit 7200 controls the operations of a variety of apparatuses attached to the vehicle body in accordance with a variety of programs. For example, the body system control unit 7200 functions as a control apparatus for a keyless entry system, a smart key system, a power window apparatus, or a variety of lights such as a headlight, a backup light, a brake light, a blinker, or a fog lamp. In this case, the body system control unit 7200 can receive radio waves transmitted from a portable device that serves instead of the key or signals of a variety of switches. The body system control unit 7200 accepts input of these radio waves or signals, and controls the vehicle door lock apparatus, the power window apparatus, the lights, or the like.

The battery control unit 7300 controls a secondary battery 7310, which is a power supply source for a drive motor, in accordance with a variety of programs. For example, the battery control unit 7300 receives information such as the battery temperature, the battery output voltage, or the remaining battery capacity from a battery apparatus including the secondary battery 7310. The battery control unit 7300 uses these signals to perform arithmetic processing, and performs temperature adjusting control on the secondary battery 7310 or controls a cooling apparatus or the like included in the battery apparatus.

The vehicle outside information detecting unit 7400 detects information regarding the outside of the vehicle including the vehicle control system 7000. For example, the vehicle outside information detecting unit 7400 is connected to at least one of an imaging unit 7410 or a vehicle outside information detecting unit 7420. The imaging unit 7410 includes at least one of a time of flight (ToF) camera, a stereo camera, a monocular camera, an infrared camera, or other cameras. The vehicle outside information detecting unit 7420 includes, for example, at least one of an environment sensor that detects the current weather, or a surrounding information detecting sensor that detects another vehicle, an obstacle, a pedestrian, or the like around the vehicle including the vehicle control system 7000.

The environment sensor may be, for example, at least one of a raindrop sensor that detects rainy weather, a fog sensor that detects a fog, a sunshine sensor that detects the degree of sunshine, or a snow sensor that detects a snowfall. The surrounding information detecting sensor may be at least one of an ultrasonic sensor, a radar apparatus, or a light detection and ranging/laser imaging detection and ranging (LIDAR) apparatus. These imaging unit 7410 and vehicle outside information detecting unit 7420 may be installed as independent sensors or apparatuses, or as an apparatus into which a plurality of sensors or apparatuses is integrated.

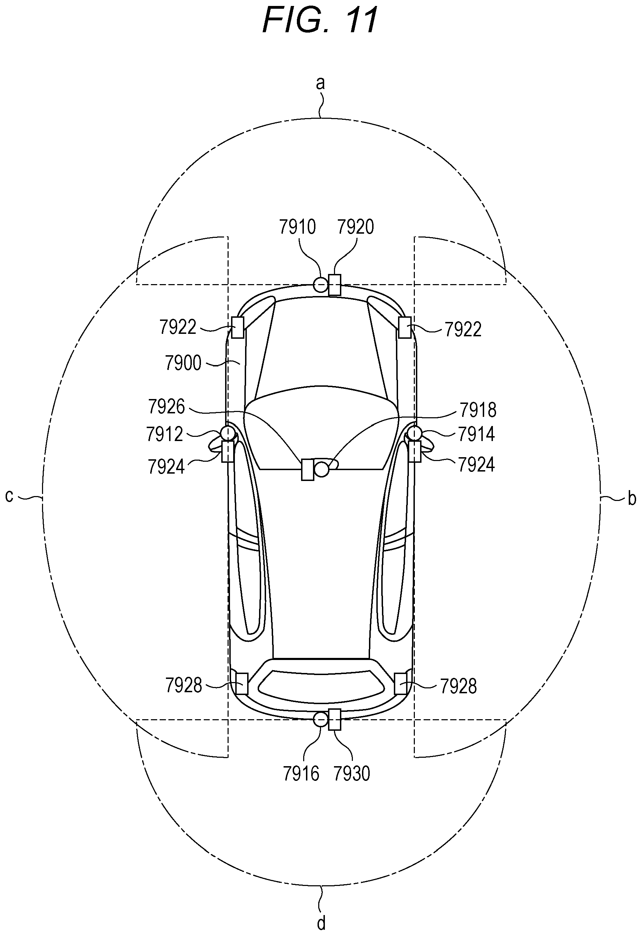

Here, Fig. 11 shows an example of installation positions of the imaging unit 7410 and the vehicle outside information detecting unit 7420. Imaging units 7910, 7912, 7914, 7916, and 7918 are positioned, for example, at least one of the front nose, a side mirror, the rear bumper, the back door, or the upper part of the windshield in the vehicle compartment of a vehicle 7900. The imaging unit 7910 attached to the front nose and the imaging unit 7918 attached to the upper part of the windshield in the vehicle compartment chiefly acquire images of the area ahead of the vehicle 7900. The imaging units 7912 and 7914 attached to the side mirrors chiefly acquire images of the areas on the sides of the vehicle 7900. The imaging unit 7916 attached to the rear bumper or the back door chiefly acquires images of the area behind the vehicle 7900. The imaging unit 7918 attached to the upper part of the windshield in the vehicle compartment is used chiefly to detect a preceding vehicle, a pedestrian, an obstacle, a traffic light, a traffic sign, a lane, or the like.

Note that Fig. 11 shows an example of the respective imaging ranges of the imaging units 7910, 7912, 7914, and 7916. An imaging range a represents the imaging range of the imaging unit 7910 attached to the front nose. Imaging ranges b and c respectively represent the imaging ranges of the imaging units 7914 and 7912 attached to the side mirrors. An imaging range d represents the imaging range of the imaging unit 7916 attached to the rear bumper or the back door. For example, overlaying image data captured by the imaging units 7910, 7912, 7914, and 7916 offers an overhead image that looks down on the vehicle 7900.

Vehicle outside information detecting units 7920, 7922, 7924, 7926, 7928, and 7930 attached to the front, the rear, the sides, the corners, and the upper part of the windshield in the vehicle compartment of the vehicle 7900 may be, for example, ultrasonic sensors or radar apparatuses. The vehicle outside information detecting units 7920, 7926, and 7930 attached to the front nose, the rear bumper, the back door, and the upper part of the windshield in the vehicle compartment of the vehicle 7900 may be, for example, LIDAR apparatuses. These vehicle outside information detecting units 7920 to 7930 are used chiefly to detect a preceding vehicle, a pedestrian, an obstacle, or the like.

Referring back to Fig. 10, description is continued. The vehicle outside information detecting unit 7400 causes the imaging unit 7410 to capture images of the outside of the vehicle, and receives the captured image data. Furthermore, the vehicle outside information detecting unit 7400 receives detection information from the connected vehicle outside information detecting unit 7420. In a case where the vehicle outside information detecting unit 7420 is an ultrasonic sensor, a radar apparatus, or a LIDAR apparatus, the vehicle outside information detecting unit 7400 causes ultrasound, radio waves, or the like to be transmitted, and receives the information of the received reflected waves. The vehicle outside information detecting unit 7400 may perform processing of detecting an object such as a person, a car, an obstacle, a traffic sign, or a letter on a road, or processing of detecting the distance on the basis of the received information. The vehicle outside information detecting unit 7400 may perform environment recognition processing of recognizing a rainfall, a fog, a road condition, or the like on the basis of the received information. The vehicle outside information detecting unit 7400 may calculate the distance to an object outside the vehicle on the basis of the received information.

Furthermore, the vehicle outside information detecting unit 7400 may perform image recognition processing of recognizing a person, a car, an obstacle, a traffic sign, a letter on a road, or the like, or processing of detecting the distance on the basis of the received image data. The vehicle outside information detecting unit 7400 may perform distortion correcting processing, alignment processing, or the like on the received image data, and combine image data captured by a different imaging unit 7410 to generate an overhead image or a panoramic image. The vehicle outside information detecting unit 7400 may use the image data captured by the different imaging unit 7410 to perform viewpoint converting processing.

The vehicle inside information detecting unit 7500 detects information of the inside of the vehicle. The vehicle inside information detecting unit 7500 is connected, for example, to a driver state detecting unit 7510 that detects the state of the driver. The driver state detecting unit 7510 may include a camera that images the driver, a biological sensor that detects biological information of the driver, a microphone that picks up a sound in the vehicle compartment, or the like. The biological sensor is attached, for example, to a seating face, the steering wheel, or the like, and detects biological information of the passenger sitting on the seat or the driver gripping the steering wheel. The vehicle inside information detecting unit 7500 may calculate the degree of the driver's tiredness or the degree of the driver's concentration or determine whether the driver has a doze, on the basis of detection information input from the driver state detecting unit 7510. The vehicle inside information detecting unit 7500 may perform processing such as noise canceling processing on the picked-up audio signal.

The integrated control unit 7600 controls the overall operation inside the vehicle control system 7000 in accordance with a variety of programs. The integrated control unit 7600 is connected to an input unit 7800. The input unit 7800 is implemented as an apparatus such as a touch panel, a button, a microphone, a switch, or a lever on which a passenger can perform an input operation. Data obtained when a voice input by a microphone is voice-recognized may be input to the integrated control unit 7600. The input unit 7800 may be, for example, a remote control apparatus that uses infrared light or other radio waves, or an external connection device such as a mobile telephone or a personal digital assistant (PDA) corresponding to the operation of the vehicle control system 7000. The input unit 7800 may be, for example, a camera. In that case, a passenger can input information through gesture. Alternatively, data obtained when the motion of a wearable apparatus worn on the passenger is detected may be input. Moreover, the input unit 7800 may include an input control circuit or the like that generates an input signal, for example, on the basis of information input by a passenger or the like using the input unit 7800 described above, and outputs the generated input signal to the integrated control unit 7600. The passenger or the like operates this input unit 7800, thereby inputting various types of data to the vehicle control system 7000 or instructing the vehicle control system 7000 about a processing operation.

The storage unit 7690 may include a read only memory (ROM) that stores a variety of programs to be executed by a microcomputer, and a random access memory (RAM) that stores a variety of parameters, arithmetic results, sensor values, or the like. Furthermore, the storage unit 7690 may be implemented as a magnetic storage device such as a hard disc drive (HDD), a semiconductor storage device, an optical storage device, a magneto-optical storage device, or the like.

The general-purpose communication I/F 7620 is a general-purpose communication I/F that mediates in communication between a variety of devices in an external environment 7750. The general-purpose communication I/F 7620 may implement a cellular communication protocol such as global system of mobile communications (GSM) (registered trademark), WiMAX, long term evolution (LTE) or LTE-advanced (LTE-A), or other wireless communication protocols such as a wireless LAN (which is also referred to as Wi-Fi (registered trademark)), or Bluetooth (registered trademark). The general-purpose communication I/F 7620 may be connected to a device (such as an application server or a control server) on an external network (such as the Internet, a cloud network, or a network specific to a service provider), for example, via a base station or an access point. Furthermore, the general-purpose communication I/F 7620 may be connected to a terminal (such as a terminal of a driver, a pedestrian, or a store, or a machine type communication (MTC) terminal) in the vicinity of the vehicle, for example, using the peer-to-peer (P2P) technology.

The dedicated communication I/F 7630 is a communication I/F that supports a communication protocol defined for the purpose of use for vehicles. The dedicated communication I/F 7630 may implement a standard protocol such as wireless access in vehicle environment (WAVE), which is a combination of IEEE 802.11p for the lower layer and IEEE 16609 for the upper layer, dedicated short range communications (DSRC), or a cellular communication protocol. The dedicated communication I/F 7630 typically performs V2X communication. The V2X communication is a concept including one or more of vehicle-to-vehicle communication, vehicle-to-infrastructure communication, vehicle-to-home communication, and vehicle-to-pedestrian communication.

The positioning unit 7640 receives, for example, global navigation satellite system (GNSS) signals (such as global positioning system (GPS) signals from a GPS satellite) from a GNSS satellite for positioning, and generates position information including the latitude, longitude, and altitude of the vehicle. Note that the positioning unit 7640 may also identify the current position by exchanging signals with a wireless access point, or acquire position information from a terminal such as a mobile phone, a PHS, or a smartphone that has a positioning function.

The beacon receiving unit 7650 receives radio waves or electromagnetic waves, for example, from a wireless station or the like installed on the road, and acquires information such as the current position, traffic congestion, closed roads, or necessary time. Note that the function of the beacon receiving unit 7650 may be included in the above-described dedicated communication I/F 7630.

The onboard device I/F 7660 is a communication interface that mediates in connections between the microcomputer 7610 and a variety of onboard devices 7760 in the vehicle. The onboard device I/F 7660 may use a wireless communication protocol such as a wireless LAN, Bluetooth (registered trademark), near field communication (NFC), or a wireless USB (WUSB) to establish a wireless connection. Furthermore, the onboard device I/F 7660 may also establish a wired connection, e.g., a universal serial bus (USB), a high-definition multimedia interface (HDMI (registered trademark)), or mobile high-definition link (MHL) via a connection terminal (and a cable if necessary), which is not shown. The onboard devices 7760 may include, for example, at least one of a mobile device of a passenger, a wearable device of a passenger, or an information device carried into or attached to the vehicle. Furthermore, the onboard devices 7760 may include a navigation apparatus that searches a route to any destination. The onboard device I/F 7660 exchanges control signals or data signals with the onboard devices 7760.

The in-vehicle network I/F 7680 is an interface that mediates in communication between the microcomputer 7610 and the communication network 7010. The in-vehicle network I/F 7680 transmits and receives signals or the like in compliance with a predetermined protocol supported by the communication network 7010.

The microcomputer 7610 of the integrated control unit 7600 controls the vehicle control system 7000 in accordance with a variety of programs on the basis of information acquired via at least one of the general-purpose communication I/F 7620, the dedicated communication I/F 7630, the positioning unit 7640, the beacon receiving unit 7650, the onboard device I/F 7660, or the in-vehicle network I/F 7680. For example, the microcomputer 7610 may calculate a control target value of the driving force generating apparatus, the steering mechanism, or the braking apparatus on the basis of acquired information regarding the inside and outside of the vehicle, and output a control instruction to the drive line control unit 7100. For example, the microcomputer 7610 may perform cooperative control for the purpose of executing the functions of the advanced driver assistance system (ADAS) including vehicle collision avoidance or impact reduction, follow-up driving based on the inter-vehicle distance, constant vehicle speed driving, vehicle collision warning, vehicle lane deviation warning, or the like. Furthermore, the microcomputer 7610 may perform cooperative control for the purpose of automatic driving or the like for autonomous running without depending on the driver's operation through control of the driving force generating apparatus, the steering mechanism, the braking apparatus, or the like on the basis of information around the vehicle to be acquired.

The microcomputer 7610 may create local map information including surrounding information regarding the current position of the vehicle by producing three-dimensional distance information between the vehicle and an object including a surrounding structure, person, or the like, on the basis of information acquired via at least one of the general-purpose communication I/F 7620, the dedicated communication I/F 7630, the positioning unit 7640, the beacon receiving unit 7650, the onboard device I/F 7660, or the in-vehicle network I/F 7680. Furthermore, the microcomputer 7610 may predict danger such as vehicle collisions, approaching pedestrians or the like, or entry to closed roads on the basis of acquired information, and generate a warning signal. The warning signal may be, for example, a signal used to generate a warning sound or turn on the warning lamp.

The audio and image output unit 7670 transmits an output signal of at least one of a sound or an image to an output apparatus capable of visually or aurally notifying a passenger of the vehicle or the outside of the vehicle of information. In the example of Fig. 10, an audio speaker 7710, a display unit 7720, and an instrument panel 7730 are exemplified as the output apparatus. For example, the display unit 7720 may include at least one of an onboard display or a head-up display. The display unit 7720 may have an augmented reality (AR) display function. The output apparatus may also be an apparatus other than these apparatuses like a headphone, a wearable device, e.g., a spectacle-type display worn on the passenger, a projector, a lamp, or the like. In a case where the output apparatus is a display apparatus, the display apparatus visually displays a result obtained by the microcomputer 7610 performing a variety of processing or information received from another control unit in a variety of forms such as text, images, tables, or graphs. Furthermore, in a case where the output apparatus is an audio output apparatus, the audio output apparatus converts audio signals including reproduced audio data, acoustic data, or the like into analog signals, and aurally outputs the analog signals.

Note that in the example shown in Fig. 10, at least two control units connected via the communication network 7010 may be integrated into a single control unit. Alternatively, the individual control units may include a plurality of control units. Moreover, the vehicle control system 7000 may also include another control unit, which is not shown. Furthermore, a part or the whole of the functions executed by any of the control units may be executed by another control unit in the above description. That is, as long as information is transmitted and received via the communication network 7010, predetermined arithmetic processing may be performed by any of the control units. Similarly, a sensor or an apparatus connected to any of the control units may be connected to another control unit, and the plurality of control units may transmit and receive detection information to and from each other via the communication network 7010.

Note that the configuration, function, and the like of the distance sensor apparatus according to the above-described embodiment can be applied to, for example, the vehicle outside information detecting unit 7400.

### REFERENCE SIGNS LIST

- 1: Distance sensor apparatus
- 13: Semiconductor laser
- 18: Measurement unit
- 21A, 21B: Light receiving unit
- 201: Light receiving element unit
- 202: Drive unit
- 205: LPF
- 206: HPF
- 210: Light receiving cell
- 210A: APD
- 210B: Quenching resistor
- 30: Subject
- LN1: Drive voltage line
- LN2: Signal read line
- P1: Connection point

## Claims

1. A distance sensor apparatus comprising:
a light receiving unit that receives reflected light from a subject, the light receiving unit including a light receiving element unit and a drive unit that supplies a drive voltage to the light receiving element unit, wherein
an application voltage to the light receiving element unit becomes larger than a breakdown voltage in a distance measurement period by the drive voltage, and the application voltage becomes larger with passage of time.

2. The distance sensor apparatus according to claim 1, wherein
the application voltage to the light receiving element unit is changed to equal to or less than the breakdown voltage in a distance non-measurement period by the drive voltage.

3. The distance sensor apparatus according to claim 1, further comprising:
a drive voltage line that is connected to the drive unit and a signal read line that is connected to the drive voltage line and reads a signal output from the light receiving unit, wherein
the light receiving element unit is connected to a connection point between the drive voltage line and the signal read line.

4. The distance sensor apparatus according to claim 3, wherein
a low-pass filter is connected to the drive voltage line and a high-pass filter is connected to the signal read line.

5. The distance sensor apparatus according to claim 3, wherein
the light receiving element unit includes a plurality of light receiving cells connected in parallel,
the light receiving cell includes an avalanche photodiode having an anode grounded and a cathode connected to one end side of a quenching resistor, and
another end side of the quenching resistor is connected to the connection point.

6. The distance sensor apparatus according to claim 5, wherein
a number of the light receiving cells is 100 or more.

7. The distance sensor apparatus according to claim 1, further comprising:
a light emitting unit;
another light receiving unit that receives light emitted from the light emitting unit; and
a measurement unit that measures a distance to the subject on a basis of a first timing at which the light receiving unit receives reflected light generated when the light emitted from the light emitting unit is reflected by the subject and a second timing at which the another light receiving unit receives the light emitted from the light emitting unit.

8. A method for controlling a distance sensor apparatus, the method comprising:
receiving reflected light from a subject by a light receiving unit; and
supplying a drive voltage to a light receiving element unit of the light receiving unit by a drive unit, wherein
an application voltage to the light receiving element unit becomes larger than a breakdown voltage in a distance measurement period by the drive voltage, and the application voltage becomes larger with passage of time.

9. Electronic equipment including the distance sensor apparatus according to claim 1.
